# EUROPÄISCHE PATENTANMELDUNG

(11) **EP 3 441 263 A1**
(43) Veröffentlichungstag der Anmeldung: **13.02.2019**
(21) Anmeldenummer: 18188005.5
(22) Anmeldetag: 08.08.2018
(51) Int. Cl.: B60Q 3/80, B60Q 3/74

(54) **VERFAHREN ZUM BETREIBEN EINER INNENRAUMBELEUCHTUNGSVORRICHTUNG, INNENRAUMBELEUCHTUNGSVORRICHTUNG UND KRAFTFAHRZEUG MIT EINER INNENRAUMBELEUCHTUNGSVORRICHTUNG**

(30) Priorität: 10.08.2017 DE 102017213992
(71) Anmelder: AUDI AG, 85045 Ingolstadt (DE)
(72) Erfinder: Kastner, Julia, 92339 Beilngries (DE); Tontsch, Friedrich-Uwe, 85051 Ingolstadt (DE); Brunsch, Thilo, 85057 Ingolstadt (DE); Berlitz, Stephan, 86529 Schrobenhausen (DE); Heider, Christian, 93047 Regensburg (DE); Ettenhuber, Benjamin, 90537 Feucht (DE)

(57) **Zusammenfassung**

Die Erfindung betrifft ein Verfahren zum Betreiben einer Innenraumbeleuchtungsvorrichtung für ein Kraftfahrzeug (10) umfassend die Schritte: Erfassen (S1) eines Umgebungsparameterwerts (U) in einer Umgebung des Kraftfahrzeugs (10) mittels einer Erfassungseinrichtung; Vergleichen des erfassten Umgebungsparameterwerts (U) mit in einer Steuereinrichtung hinterlegten Beleuchtungsparameterwerten (B1...Bn); Zuordnen (S2) des erfassten Umgebungsparameterwerts (U) zu zumindest einem der Beleuchtungsparameterwerte (B1...Bn) und Einstellen (S3) des Beleuchtungsparameterwerts (B) zumindest eines aktivierten Leuchtmittels (12) der Innenraumbeleuchtungsvorrichtung, dem der erfasste Umgebungsparameterwert (U) zugeordnet wird.

## Beschreibung

Die Erfindung betrifft ein Verfahren zum Betreiben einer Innenraumbeleuchtungsvorrichtung. Bei dem Verfahren wird mittels einer Erfassungseinrichtung ein Umgebungsparameterwert in einer Umgebung des Kraftfahrzeugs erfasst. Die Erfindung betrifft auch eine Innenraumbeleuchtungsvorrichtung und ein Kraftfahrzeug mit der erfindungsgemäßen Innenraumbeleuchtungsvorrichtung.

Aus dem allgemeinen Stand der Technik sind unterschiedliche Formen der Innenraumbeleuchtung oder der Beleuchtung von Bedienelementen in einem Innenraum eines Kraftfahrzeugs bekannt. Im Innenraum des Kraftfahrzeugs sind beispielsweise Bedienelemente an der Mittelkonsole farblich hinterleuchtet, um diese besser sichtbar zu machen und einem Fahrer oder Beifahrer des Kraftfahrzeugs bei der Bedienung und dem Auffinden des richtigen Bedienelements, gerade bei Dunkelheit, zu unterstützen. Neben der Beleuchtung von Bedienelementen befinden sich einzelne Leuchten im Innenraum des Kraftfahrzeugs, welche durch den Fahrer und/oder den Beifahrer des Kraftfahrzeugs bei Bedarf aktiviert werden können.

Ein voreingestelltes Beleuchtungskonzept für einen Innenraum eines Kraftfahrzeugs ist beispielsweise aus der DE 198 31 722 C2 bekannt. Bei diesem Beleuchtungskonzept wird in Abhängigkeit von einem Betriebszustand des Kraftfahrzeugs oder in Abhängigkeit von einer Lichtintensität in einer Umgebung des Kraftfahrzeugs die Innenraumbeleuchtung automatisch eingeschaltet, wenn ein Lichtgrenzwert der Lichtintensität unterschritten ist. Zur Erfassung der Lichtintensität beziehungsweise der Umgebungshelligkeit wird ein Regensensor verwendet. Die Funktion eines Regensensors ist beispielsweise in der DE 100 05 127 A1 beschrieben.

Der Nachteil derartiger Beleuchtungskonzepte besteht darin, dass deren Einstellungen, beispielsweise deren Helligkeit beziehungsweise Lichtintensität, bereits voreingestellt sind und sich entweder gar nicht ändern lassen oder durch den Nutzer manuelle nacheingestellt werden müssen.

In der DE 10 2012 025 619 A1 ist ein Verfahren zur Steuerung einer Innenraumbeleuchtung in einem Fahrzeug mit mehreren steuerbaren Leuchtmitteln beschrieben. Bei dem Verfahren wird in Abhängigkeit von Fahrzeugbetriebsdaten durch separates Ansteuern der einzelnen Leuchtmittel ein Bewegungslichtmuster erzeugt, wobei die Fahrzeugbetriebsdaten Umgebungsdaten enthalten, die über einen Lichtsensor aufgenommen werden.

Aufgabe der vorliegenden Erfindung ist es daher, ein Verfahren zum Betreiben einer Innenraumbeleuchtungsvorrichtung, eine Innenraumbeleuchtungsvorrichtung sowie ein Kraftfahrzeug mit einer Innenraumbeleuchtungsvorrichtung bereitzustellen, mittels welchem beziehungsweise bei welcher auf besonders einfache und zuverlässige Art und Weise eine Änderung der Einstellung, insbesondere im Hinblick auf eine Lichtintensität, vornehmbar ist.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Erfindungsgemäß wird diese Aufgabe gelöst durch ein Verfahren zum Betreiben einer Innenraumbeleuchtungsvorrichtung für ein Kraftfahrzeug. In einem ersten Verfahrensschritt wird ein Umgebungsparameterwert in einer Umgebung des Kraftfahrzeugs mittels einer Erfassungseinrichtung erfasst. Die Erfassungseinrichtung ist dazu bevorzugt auf eine Umgebung des Kraftfahrzeugs, also einen Außenbereich des Kraftfahrzeugs, gerichtet. Erfindungsgemäß wird als Umgebungsparameterwert eine Lichtintensität in der Umgebung des Kraftfahrzeugs erfasst. Um die Lichtintensität in der Umgebung des Kraftfahrzeugs erfassen oder bestimmen oder berechnen zu können, kann die Erfassungseinrichtung beispielsweise einen Regen-Licht-Sensor aufweisen. Alternativ oder zusätzlich kann die Erfassungseinrichtung zur Erfassung der Lichtintensität auch ein Photometer und/oder eine Kamera und/oder einen Helligkeitssensor und/oder einen Regensensor aufweisen. Durch die Erfassungseinrichtung kann der Umgebungsparameterwert, also insbesondere der Wert einer Lichtintensität, besonders zuverlässig erfasst werden.

Das erfindungsgemäße Verfahren zeichnet sich dadurch aus, dass der erfasste Umgebungsparameterwert mit in einer Steuereinrichtung hinterlegten Beleuchtungsparameterwerten verglichen wird. Bei den Beleuchtungsparameterwerten handelt es sich bevorzugt um Beleuchtungsparameterwerte zumindest eines Leuchtmittels der Innenraumbeleuchtungsvorrichtung. Die Beleuchtungsparameterwerte können insbesondere in einem Speicher der Steuereinrichtung hinterlegt sein. Bevorzugt kann es sich bei den Beleuchtungsparameterwerten um Werte einer, insbesondere einstellbaren, Lichtintensität des zumindest einen Leuchtmittels handeln. Die Lichtintensität, mit welcher das zumindest eine Leuchtmittel Licht emittiert oder ausgibt, kann bevorzugt durch die Steuereinrichtung eingestellt oder vorgegeben werden.

Je nachdem, welcher Umgebungsparameterwert erfasst wird, wird bevorzugt in Abhängigkeit davon der Beleuchtungsparameterwert bestimmt. Dazu wird in einem weiteren Verfahrensschritt der erfasste Umgebungsparameterwert zu zumindest einem der Beleuchtungsparameterwerte zugeordnet. Mit anderen Worten korrespondiert der erfasste Umgebungsparameterwert mit einem der Beleuchtungsparameterwerte. Mit anderen Worten ist einem erfassten Umgebungsparameterwert ein Beleuchtungsparameterwert zugewiesen. Zum Beispiel wird einem erfassten ersten Umgebungsparameterwert ein erster Beleuchtungsparameterwert zugeordnet.

Schließlich wird der Beleuchtungsparameterwert des zumindest einen, insbesondere aktivierten oder eingeschalteten, Leuchtmittels der Innenraumbeleuchtungsvorrichtung eingestellt, dem der erfasste Umgebungsparameterwert zugeordnet wird. Mit dem Beleuchtungsparameterwert wird eine Lichtintensität des zumindest einen Leuchtmittels eingestellt. Bevorzugt wird also in Abhängigkeit von einer Umgebungshelligkeit beziehungsweise einer Lichtintensität in einer Umgebung des Kraftfahrzeugs die Lichtintensität des zumindest einen Leuchtmittels angepasst. Dabei wird die Lichtintensität des zumindest einen Leuchtmittels proportional zur Lichtintensität in der Umgebung angepasst. Es wird die Lichtintensität dabei proportional zur Umgebungshelligkeit angepasst. Nimmt beispielsweise die Umgebungshelligkeit zu, so wird auch durch die Steuereinrichtung die Lichtintensität des zumindest einen Leuchtmittels erhöht.

Dadurch wird eine Kopplung des zumindest einen Leuchtmittels mit Umgebungsbedingungen um das Kraftfahrzeug hergestellt, wodurch automatisch, also ohne ein Zutun des Fahrers oder Beifahrers, ein Beleuchtungsparameterwert des zumindest einen Leuchtmittels angepasst werden kann. Durch die automatische Anpassung kann nicht nur ein Komfort für den Fahrer, sondern auch eine Sicherheit beim Führen des Kraftfahrzeugs im Straßenverkehr erhöht werden, da der Fahrer oder Beifahrer keine manuellen Einstellungen mehr an dem zumindest einen Leuchtmittel vornehmen muss und damit nicht mehr vom Verkehrsgeschehen abgelenkt wird.

Erfindungsgemäß wird, wenn der erfasste Umgebungsparameterwert unterhalb eines der Steuereinrichtung hinterlegten Beleuchtungsparameterwerts liegt, der Beleuchtungsparameterwert auf 40 Prozent des maximalen Beleuchtungsparameterwerts eingestellt. Im Betrieb des zumindest einen Leuchtmittels kann das zumindest eine Leuchtmittel eine maximale Lichtintensität als maximalen Beleuchtungsparameter aufweisen. Ab einem vorbestimmten Umgebungsparameterwert kann das Leuchtmittel nicht weiter gedimmt werden, also auf 40 Prozent der maximalen Lichtintensität. Die Lichtintensität, mit welcher Licht durch das zumindest eine Leuchtmittel emittiert oder ausgegeben wird, kann nicht unter 40 Prozent der maximalen Lichtintensität fallen. Mit anderen Worten kann ein minimaler Wert des Beleuchtungsparameterwertes vorgegeben sein. Das heißt, auch wenn, durch die Erfassungseinrichtung ein Umgebungsparameterwert erfasst wird, welcher einem Beleuchtungsparameterwert von weniger als 40 Prozent des maximalen Beleuchtungsparameterwertes zugeordnet werden würde, so würde der Beleuchtungsparameterwert weiterhin 40 Prozent des maximalen Beleuchtungsparameterwertes betragen, mit welchem das zumindest eine Leuchtmittel eingestellt wird. Mit dem maximalen Beleuchtungsparameterwert ist bevorzugt ein Maximalwert der Lichtintensität des zumindest einen Leuchtmittels gemeint. Durch die Festlegung eines Minimalwertes kann sichergestellt werden, dass das zumindest eine Leuchtmittel, beispielsweise bei Dunkelheit, nicht automatisch deaktiviert wird.

Eine Ausführungsform sieht vor, dass mittels der Erfassungseinrichtung kontinuierlich in vorbestimmten zeitlichen Abständen der Umgebungsparameterwert erfasst und in Abhängigkeit davon der Beleuchtungsparameterwert des zumindest einen Leuchtmittels kontinuierlich in Abhängigkeit von dem Beleuchtungsparameterwert angepasst wird, dem der Umgebungsparameterwert zugeordneten wird. Mit anderen Worten wird in regelmäßigen oder gleichmäßigen Zeitabständen der Umgebungsparameterwert mittels der Erfassungseinrichtung erfasst oder gemessen oder bestimmt. Mit "vorbestimmten zeitlichen Abständen" sind bevorzugt Zeitabschnitte oder Zeitintervalle gemeint. Beispielsweise kann der Umgebungsparameterwert jede Sekunde, also in einem zeitlichen Abstand von einer Sekunde, oder alle 0,5 Sekunden bis 10 Sekunden erfasst werden. Dadurch erfolgt eine zeit- und realitätsnahe Anpassung des Beleuchtungsparameterwerts des zumindest einen Leuchtmittels in Abhängigkeit von den Umgebungsbedingungen.

In vorteilhafter Weise wird, wenn der erfasste Umgebungsparameterwert einen vorbestimmten Schwellwert oder Grenzwert überschreitet, das zumindest eine Leuchtmittel deaktiviert. Mit anderen Worten kann, wenn der Umgebungsparameter einen vorbestimmten Schwellwert überschreitet, das zumindest eine Leuchtmittel ausgeschaltet werden.

Zu der Erfindung gehört auch eine Innenraumbeleuchtungsvorrichtung für ein Kraftfahrzeug. Die Innenraumbeleuchtungsvorrichtung umfasst eine Erfassungseinrichtung, welche dazu eingerichtet ist, einen Umgebungsparameterwert in einer Umgebung des Kraftfahrzeugs zu erfassen, wobei die Erfassungseinrichtung dazu eingerichtet ist, als Umgebungsparameterwert eine Lichtintensität in der Umgebung des Kraftfahrzeugs zu erfassen . Die Erfassungseinrichtung ist dazu bevorzugt auf eine Umgebung des Kraftfahrzeugs gerichtet. Ferner umfasst die Innenraumbeleuchtungsvorrichtung zumindest ein Leuchtmittel. Das Leuchtmittel kann beispielsweise eine LED, insbesondere eine RGB-LED, aufweisen. Besonders bevorzugt umfasst die Innenraumbeleuchtungsvorrichtung mehrere Leuchtmittel. Schließlich umfasst die Innenraumbeleuchtungsvorrichtung eine Steuereinrichtung, welche dazu eingerichtet ist, den erfassten Umgebungsparameterwert mit in der Steuereinrichtung hinterlegten Beleuchtungsparameterwerten des zumindest einen Leuchtmittels zu vergleichen. Die Steuereinrichtung ist ferner dazu eingerichtet, den erfassten Umgebungsparameterwert zumindest einem Beleuchtungsparameterwert der hinterlegten Beleuchtungsparameterwerte zuzuordnen und diesen Beleuchtungsparameterwert des zumindest einen Leuchtmittels der Innenraumbeleuchtungsvorrichtung einzustellen, wobei die Steuereinrichtung dazu eingerichtet ist, mit dem Beleuchtungsparameterwert eine Lichtintensität des zumindest einen Leuchtmittels einzustellen. Die Steuereinrichtung ist ferner dazu eingerichtet, die Lichtintensität des zumindest einen Leuchtmittels proportional zur Lichtintensität in der Umgebung anzupassen, wobei wenn der erfasste Umgebungsparameterwert unterhalb eines der Steuereinrichtung hinterlegten Beleuchtungsparameterwerts liegt, die Steuereinrichtung dazu eingerichtet ist, den Beleuchtungsparameterwert auf 40 Prozent des maximalen Beleuchtungsparameterwerts einzustellen.

Zum Erfassen des Umgebungsparameterwertes, insbesondere der Lichtintensität, kann die Erfassungseinrichtung beispielsweise einen Helligkeitssensor und/oder einen Regensensor und/oder einen Regen-Licht-Sensor und/oder eine Kamera aufweisen. Zusätzlich oder alternativ kann die Erfassungseinrichtung dazu eingerichtet sein, zum Erfassen des Umgebungsparameterwertes den Umgebungsparameterwert von einer fahrzeugexternen Einheit, insbesondere einer Wetterdatenbank, zu beziehen. Die fahrzeugexterne Einheit kann beispielsweise dazu eingerichtet sein, Umgebungsparameter positionsabhängig, also an vorbestimmten Positionen, insbesondere geographischen Positionen, oder Orten oder Bereichen, zu sammeln und auszuwerten. Zum Beziehen der Umgebungsparameterwerte kann die Erfassungseinrichtung ferner dazu eingerichtet sein, eine aktuelle Position des Kraftfahrzeugs an die fahrzeugexterne Einheit zu übermitteln. In Abhängigkeit von der aktuellen Position des Kraftfahrzeugs kann die fahrzeugexterne Einheit wiederrum, insbesondere positionsbezogen, Umgebungsparameterwerte oder einen Umgebungsparameterwert bereitstellen. Dadurch kann der Umgebungsparameterwert besonders zuverlässig bestimmt und damit der Beleuchtungsparameterwert des zumindest einen Leuchtmittels besonders genau eingestellt werden.

Die erfindungsgemäße Innenraumbeleuchtungsvorrichtung ist bevorzugt in einem Kraftfahrzeug realisiert. Das Kraftfahrzeug kann als Kraftwagen, insbesondere Personenkraftwagen, ausgebildet sein.

Zu der Erfindung gehören auch Weiterbildungen der erfindungsgemäßen Innenraumbeleuchtungsvorrichtung und des Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Innenraumbeleuchtungsvorrichtung und des erfindungsgemäßen Kraftfahrzeugs hier nicht noch einmal beschrieben.

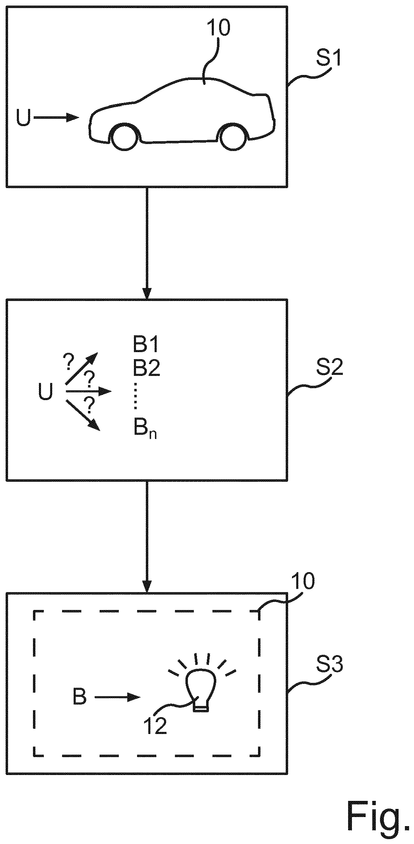

Im Folgenden ist ein Ausführungsbeispiel der Erfindung beschrieben. Hierzu zeigt die einzige Figur (Fig.) in einem schematischen Ablaufdiagramm die Verfahrensschritte zum Betreiben einer Innenraumbeleuchtungsvorrichtung eines Kraftfahrzeugs.

Bei dem im Folgenden erläuterten Ausführungsbeispiel handelt es sich um bevorzugte Ausführungsformen der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Bei dem Verfahren zum Betreiben einer Innenraumbeleuchtungsvorrichtung für ein Kraftfahrzeug 10 wird in einem ersten Verfahrensschritt S1 ein Umgebungsparameterwert U mittels einer Erfassungseinrichtung der Innenraumbeleuchtungsvorrichtung des Kraftfahrzeugs 10 erfasst oder gemessen. Dazu ist die Erfassungseinrichtung bevorzugt auf einen Außenbereich des Kraftfahrzeugs gerichtet. Mit anderen Worten ist die Erfassungseinrichtung dazu eingerichtet, einen Umgebungsparameterwert in der Umgebung des Kraftfahrzeugs 10 aufzunehmen. Als Umgebungsparameterwert U ist die Erfassungseinrichtung dazu eingerichtet, eine Lichtintensität in einer Umgebung des Kraftfahrzeugs 10 zu erfassen. Die Lichtintensität kann auch als Lichtstärke oder Strahlungsintensität bezeichnet werden. Besonders bevorzugt ist die Erfassungseinrichtung dazu eingerichtet, Umgebungsparameterwerte der Lichtintensität in einem Bereich von 0 bis 6126 Lumen zu erfassen. Zum Erfassen der Lichtintensität in der Umgebung des Kraftfahrzeugs 10 kann die Erfassungseinrichtung beispielsweise einen Helligkeitssensor oder einen Regen-Licht-Sensor aufweisen.

Die Erfassungseinrichtung ist ferner dazu eingerichtet, den Umgebungsparameterwert U kontinuierlich in vorbestimmten zeitlichen Abständen, insbesondere in gleichmäßigen vorbestimmten zeitlichen Abständen, zu erfassen oder zu messen. Sobald die Erfassungseinrichtung den Umgebungsparameterwert U erfasst, ist die Erfassungseinrichtung dazu eingerichtet, den erfassten Umgebungsparameterwert U an eine Steuereinrichtung der Innenraumbeleuchtungsvorrichtung zu übermitteln. Die Steuereinrichtung, welche beispielsweise als eine ECU (englisch electronic control unit) oder als elektrisehe Schaltung ausgebildet sein kann, ist dazu eingerichtet, den erfassten Umgebungsparameterwert U zu empfangen.

In einem zweiten Verfahrensschritt S2 wird der erfasste Umgebungsparameterwert U mit Beleuchtungsparameterwerten B1...Bn verglichen. Die Beleuchtungsparameterwerte B1...Bn sind beispielsweise in einem Speicher der Steuereinrichtung hinterlegt. Nach dem Vergleichen wird der erfasste Umgebungsparameterwert U einem Beleuchtungsparameterwert zugeordnet. Alternativ kann es auch vorgesehen sein, dass jedem erfassten Umgebungsparameterwert oder einem Intervall an erfassten Umgebungsparameterwerten, das heißt mehreren Umgebungsparameterwerten, ein Beleuchtungsparameterwert zugewiesen ist, sodass der Verfahrensschritt des Vergleichens entfallen kann.

Bei dem Beleuchtungsparameterwerten B1...Bn handelt es sich um die Beleuchtungsparameterwerte B1...Bn zumindest eines Leuchtmittels 12 der Innenraumbeleuchtungsvorrichtung des Kraftfahrzeugs 10. Die Innenraumbeleuchtungsvorrichtung kann auch mehrere Leuchtmittel aufweisen. Das zumindest eine Leuchtmittel 12 oder die Leuchtmittel 12 sind insbesondere in einem Innenraum des Kraftfahrzeugs 10 angeordnet. Das zumindest eine Leuchtmittel 12 oder die Leuchtmittel 12 können beispielsweise als Markierungslicht und/oder Türbeleuchtung und/oder Ambientenbeleuchtung und/oder Beleuchtung für einen Fußraum oder eines Handschuhfachs ausgebildet sein. Dabei können Leuchtmittel 12 oder zumindest ein Leuchtmittel im Bereich einer Tür oder Türen des Kraftfahrzeugs 10 und/oder im Bereich einer Mittelkonsole des Kraftfahrzeugs 10 und/oder im Bereich eines Armaturenbretts des Kraftfahrzeugs 10 in dem Innenraum des Kraftfahrzeugs 10 angeordnet sein.

Ist der Umgebungsparameterwert U einem Beleuchtungsparameterwert B der Beleuchtungsparameterwerte B1...Bn zugeordnet, so wird in einem dritten Verfahrensschritt S3 der Beleuchtungsparameterwert B des zumindest einen Leuchtmittels 12 eingestellt. Einem erfassten Umgebungsparameterwert U wird durch die Steuereinrichtung ein Beleuchtungsparameterwert B zugewiesen, mit welchem das zumindest eine Leuchtmittel 12 eingestellt wird. Mit dem Beleuchtungsparameterwert B1...Bn kann beispielsweise die Lichtintensität des zumindest einen Leuchtmittels 12 eingestellt werden. Mit anderen Worten kann eine Helligkeit des mit dem zumindest einen Leuchtmittels 12 emittierten Lichts eingestellt werden. Mit anderen Worten kann mit Hilfe des Beleuchtungsparameterwerts ein Dimmwert des zumindest einen Leuchtmittels 12 eingestellt werden.

Während einer Fahrt des Kraftfahrzeugs 10 wird durch die Erfassungseinrichtung kontinuierlich ein Wert der Lichtintensität in der Umgebung des Kraftfahrzeugs 10 erfasst. Je nach erfasstem aktuellen Wert der Lichtintensität wird der Beleuchtungsparameterwert B des zumindest einen Leuchtmittels 12 eingestellt. Mit "Einstellen" ist hier bevorzugt die Anpassung der Lichtintensität, welche durch das Licht des zumindest einen Leuchtmittels 12 ausgeben wird, gemeint. Beispielsweise wird die Lichtintensität, also ein Wert der Lichtintensität, höher oder niedriger gestellt. Bevorzugt verhält sich die Einstellung des Beleuchtungsparameterwerts proportional zur erfassten Lichtintensität in der Umgebung des Kraftfahrzeugs 10. Das heißt, steigt die Lichtintensität in der Umgebung an, so steigt auch die Lichtintensität, also der Wert der Lichtintensität, des zumindest einen Leuchtmittels 12. Wird beispielsweise der maximale Umgebungsparameterwert von 6126 Lumen erfasst, so wird der maximale Beleuchtungsparameterwert des zumindest einen Leuchtmittels eingestellt.

Sinkt die Lichtintensität in der Umgebung, so sinkt auch die Lichtintensität des zumindest einen Leuchtmittels 12. Mit anderen Worten wird bei sinkender Intensität des zumindest einen Leuchtmittels 12 die Helligkeit oder Lichtintensität des zumindest einen Leuchtmittels 12 gedimmt. Dabei kann der Wert der Lichtintensität, also der Beleuchtungsparameterwert, nicht unter einen vorbestimmten Schwellwert gedimmt werden. Würde die Steuereinrichtung dem Umgebungsparameterwert einen Beleuchtungsparameterwert zuordnen, welche geringer ist als 40 Prozent des Maximalwertes des Beleuchtungsparameterwerts liegt, so stellt die Steuereinrichtung als den Beleuchtungsparameterwert 40 Prozent des maximalen Beleuchtungsparameterwerts ein.

Im Folgenden wird noch auf ein konkretes Ausführungsbeispiel zur Kalibrierung oder Parametrierung des Beleuchtungsparameterwertes des zumindest einen Leuchtmittels und zu dem Schwellwert eingegangen.

Die Erfassungseinrichtung gibt Messwerte, also Umgebungsparameterwerte, von 0 bis 6126 Lumen aus. Dabei entspricht 0 Lumen kompletter Dunkelheit und 6126 Lumen einem bewölkten Himmel an Mittag. Zur Einstellung des Beleuchtungsparameterwertes für das zumindest eine Leuchtmittel 12 wird mit den von der Erfassungseinrichtung ausgegebenen Umgebungsparameterwerten der log10 gebildet. Anschließend werden diese Werte auf 1 normiert. Damit werden Werte erzeugt, welche zwischen 0 und 1 logarithmisch (durch den log 10) verlaufen. Anschließend wird durch die Steuereinrichtung überprüft, ob der normierte Wert, also der normierte Umgebungsparameterwert, kleiner als 0,4 ist. Ist das der Fall, so bleibt der Wert für die Dimmung der zumindest einen Leuchtmittels auf 0,4. Dabei wird das Licht des zumindest einen Leuchtmittels mit einer Lichtintensität von 40 Prozent der maximalen Lichtintensität emittiert. Die Lichtintensität wird um 60 Prozent herabgesetzt, also gedimmt.

Ist der Wert des normierten Werts höher als 0,4, dann wird dieser als Dimmwert, also Beleuchtungsparameterwert, eingesetzt.

Insgesamt zeigen die Beispiele, wie durch die Erfindung eine Anpassung der Innenbeleuchtung auf Basis der Umgebungshelligkeit erfolgt.

## Patentansprüche

1. Verfahren zum Betreiben einer Innenraumbeleuchtungsvorrichtung für ein Kraftfahrzeug (10) umfassend die Schritte:
- Erfassen (S1) eines Umgebungsparameterwerts (U) in einer Umgebung des Kraftfahrzeugs (10) mittels einer Erfassungseinrichtung;
- Vergleichen des erfassten Umgebungsparameterwerts (U) mit in einer Steuereinrichtung hinterlegten Beleuchtungsparameterwerten (B1...Bn);
- Zuordnen (S2) des erfassten Umgebungsparameterwerts (U) zu zumindest einem der Beleuchtungsparameterwerte (B1 ...Bn) und
- Einstellen (S3) des Beleuchtungsparameterwerts (B) zumindest eines aktivierten Leuchtmittels (12) der Innenraumbeleuchtungsvorrichtung, dem der erfasste Umgebungsparameterwert (U) zugeordnet wird; wobei
- als Umgebungsparameterwert (U) eine Lichtintensität in der Umgebung des Kraftfahrzeugs (10) erfasst wird; wobei
- mit dem Beleuchtungsparameterwert (B) eine Lichtintensität des zumindest einen Leuchtmittels (12) eingestellt wird;
**dadurch gekennzeichnet, dass**
- die Lichtintensität des zumindest einen Leuchtmittels (12) proportional zur Lichtintensität in der Umgebung angepasst wird; wobei
- wenn der erfasste Umgebungsparameterwert (U) unterhalb eines der Steuereinrichtung hinterlegten Beleuchtungsparameterwerts (B1...Bn) liegt, die Steuereinrichtung dazu eingerichtet ist, den Beleuchtungsparameterwert (B) auf 40 Prozent des maximalen Beleuchtungsparameterwerts einzustellen.

2. Verfahren nach Anspruch 1,
**dadurch gekennzeichnet, dass**
mittels der Erfassungseinrichtung kontinuierlich in vorbestimmten zeitlichen Abständen der Umgebungsparameterwert (U) erfasst und in Abhängigkeit davon der Beleuchtungsparameterwert (B) des zumindest einen Leuchtmittels (12) kontinuierlich in Abhängigkeit von dem Beleuchtungsparameterwert (B) angepasst wird, dem der Umgebungsparameterwert (U) zugeordneten wird.

3. Innenraumbeleuchtungsvorrichtung für ein Kraftfahrzeug (10) umfassend:
- eine Erfassungseinrichtung, welche dazu eingerichtet ist, einen Umgebungsparameterwert (U) in einer Umgebung des Kraftfahrzeugs (10) zu erfassen; wobei
- die Erfassungseinrichtung dazu eingerichtet ist, als Umgebungsparameterwert (U) eine Lichtintensität in der Umgebung des Kraftfahrzeugs (10) zu erfassen;
- zumindest ein Leuchtmittel (12); und
- eine Steuereinrichtung, welche dazu eingerichtet ist, den erfassten Umgebungsparameterwert (U) mit der Steuereinrichtung hinterlegten Beleuchtungsparameterwerten (B1...Bn) des zumindest einen Leuchtmittels (12) zu vergleichen; wobei
- die Steuereinrichtung ferner dazu eingerichtet ist, den erfassten Umgebungsparameterwert (U) zumindest einem Beleuchtungsparameterwert (B) der hinterlegten Beleuchtungsparameterwerte (B1...Bn) zuzuordnen und diesen Beleuchtungsparameterwert (B) des zumindest einen Leuchtmittels (12) der Innenraumbeleuchtungsvorrichtung einzustellen; wobei
- die Steuereinrichtung dazu eingerichtet ist, mit dem Beleuchtungsparameterwert (B) eine Lichtintensität des zumindest einen Leuchtmittels (12) einzustellen;
**dadurch gekennzeichnet, dass**
- die Steuereinrichtung ferner dazu eingerichtet ist, die Lichtintensität des zumindest einen Leuchtmittels (12) proportional zur Lichtintensität in der Umgebung anzupassen; wobei
- wenn der erfasste Umgebungsparameterwert (U) unterhalb eines der Steuereinrichtung hinterlegten Beleuchtungsparameterwerts (B1...Bn) liegt, die Steuereinrichtung dazu eingerichtet ist, den Beleuchtungsparameterwert (B) auf 40 Prozent des maximalen Beleuchtungsparameterwerts einzustellen.

4. Innenraumbeleuchtungsvorrichtung Anspruch 3,
**dadurch gekennzeichnet, dass**
die Erfassungseinrichtung einen Regen-Licht-Sensor und/oder einen Helligkeitssensor und/oder eine Kamera umfasst.

5. Innenraumbeleuchtungsvorrichtung nach Anspruch 3 oder 4,
**dadurch gekennzeichnet, dass**
die Erfassungseinrichtung ferner dazu eingerichtet ist, den Umgebungsparameterwert (U) von einer fahrzeugexternen Einheit, insbesondere einer Wetterdatenbank, zu beziehen.

6. Kraftfahrzeug (10) mit einer Innenraumbeleuchtungsvorrichtung nach einem der Ansprüche 3 bis 5.
